# EUROPÄISCHE PATENTSCHRIFT

(11) **EP 3 443 230 B1**
(45) Veröffentlichungstag und Bekanntmachung des Hinweises auf die Patenterteilung: **11.03.2020**
(21) Anmeldenummer: 17720721.4
(22) Anmeldetag: 21.04.2017
(51) Int. Cl.: F15B 11/02, F15B 15/08, F15B 15/10, F16K 31/00, F15B 15/18, H02N 2/04

(54) **PIEZOHYDRAULISCHER AKTOR**
PIEZO-HYDRAULIC ACTUATOR
ACTIONNEUR PIEZO-HYDRAULIQUE

(30) Priorität: 20.05.2016 DE 102016208773
(43) Veröffentlichungstag der Anmeldung: 20.02.2019
(73) Patentinhaber: MetisMotion GmbH, 81549 München (DE)
(72) Erfinder: BACHMAIER, Georg, 80469 München (DE); VITTORIAS, Iason, 80538 München (DE); ZÖLS, Wolfgang, 81249 München-Lochhausen (DE)
(74) Vertreter: Hofstetter, Schurack & Partner
(86) Internationale Anmeldenummer: PCT/EP2017/059514
(87) Internationale Veröffentlichungsnummer: WO 2017/198420

(56) Entgegenhaltungen:
- DE-A1-102013 219 759
- JP-A- 2000 314 402

## Beschreibung

Die Erfindung betrifft einen piezohydraulischen Aktor sowie ein Verfahren zu dessen Betrieb.

Bei Aktoren spielen insbesondere vier Eigenschaften eine Rolle, und zwar Kraft, Auslenkung, Geschwindigkeit und Bauraum. Bei vielen Aktoranwendungen existieren unterschiedliche Arbeitspunkte, in denen entweder eine hohe Kraft oder eine hohe Geschwindigkeit erforderlich ist. Bei einem Aktor zum Auswurf von Werkzeugen bei einer Werkzeugmaschine ist die Anforderung, dass der Aktor die Auslenkung bis zum Kontakt mit dem Werkzeug mit großer Geschwindigkeit zurücklegt, wobei keine besonders großen Kräfte erforderlich sind. Sobald der Aktor Kontakt mit dem Werkzeug hat, ist die Anforderung genau anders herum. Es werden große Kräfte benötigt, um das Werkzeug ausstoßen zu können. Allerdings ist keine große Geschwindigkeit erforderlich, da die hierfür notwendige Aktorauslenkung sehr gering ist. Somit ergeben sich für den Aktor zwei erforderliche Modi. Einen Geschwindigkeitsmodus und einen Kraftmodus. Ein derartiges Konzept mit diesen beiden Modi findet ebenso in der Robotik immer öfter Verwendung. Ein Beispiel dafür ist beispielsweise aus der Patentanmeldung JP2000314402 bekannt.

Herkömmlicherweise wird ein zwei-stufiges Getriebe verwendet, welches die Möglichkeit der Umschaltung zwischen den zwei Modi, und zwar den Geschwindigkeits- und den Kraftmodus, anbietet. Nachteilig sind dabei die Drehmoment-/Kraftsprünge während der Umschaltung, insbesondere unter Last. [1] offenbart einen linearen Aktor, der mit Hilfe eines Getriebes und eines zusätzlichen Motors dem Problem entgegenwirkt. ([1]: A. Girard and H. Asada - A Two-Speed Actuator for Robotics with Fast Seamless Gear Shifting, 2015 IEEE/RSJ International Conference on Intelligent Robots and Systems (IROS)). Nachteiligerweise haben die Komplexität und die Leistungsdichte eines derartigen Systems noch einen großen Optimierungsbedarf.

Alternative werden herkömmlicherweise unterschiedliche Aktorprinzipien, wie beispielsweise Seilantriebe angeboten, die zur Realisierung zweier unterschiedlicher Modi verwendbar sind. Beispielsweise verfügen verdrillte Seile unter anderem über ein nicht lineares Übersetzungsverhältnis, sodass verdrillte Seile ebenso mittels einer zusätzlichen Verdrehung für höhere Kräfte aus derselben Motoreinheit verwendet werden können. Der Vorteil einer derartigen Lösung sind geringere Verluste. Allerdings sind die beiden Modi über einen hysterese-behafteten Entspannungsprozess ("relaxation process") miteinander gekoppelt. Um diesen Effekt entgegenzuwirken, haben Forscher einen Kupplungsmechanismus mit einer zusätzlichen Motoreinheit entwickelt. (siehe [2]: Y.J. Shin, H.J. Lee, K.-S. Kim, S. Kim, - "Dual-Mode Twisting Actuation Mechanism with an Active Clutch for Active Mode-Change and Simple Relaxation Process", 2015 IEEE/RSJ International Conference on Intelligent Robots and Systems (IROS)). Ein derartiges System erhöht ebenso die Komplexität des Gesamtsystems. Die Beherrschung verdrehter Seile und die damit verbundenen Nichtlinearitäten sind weiterhin ein Forschungsthema.

Es ist Aufgabe der Erfindung einen piezohydraulischen Aktor derart bereit zu stellen, dass dieser in einem ersten Modus hinsichtlich der Kraft und in einem zweiten Modus hinsichtlich der Geschwindigkeit der Auslenkung des Aktors optimiert ist, wobei im ersten Modus die Kraft möglichst groß und im zweiten Modus die Geschwindigkeit möglichst groß sein sollen. Es soll zudem ein unterbrechungsfreies Umschalten zwischen beiden Modi ausführbar sein. Es soll zudem ein automatisches Umschalten ausführbar sein. Der Aktor soll in harschen oder belastenden Umgebungen verwendbar sein.

Die Aufgabe wird durch einen piezohydraulischen Aktor gemäß dem Hauptanspruch und mittels eines Verfahrens zum Betrieb eines piezohydraulischen Aktors gemäß dem Nebenanspruch gelöst.

Gemäß einem ersten Aspekt wird ein piezohydraulischer Aktor vorgeschlagen, der als ein vier Kammern aufweisendes System ausgebildet ist, wobei eine erste Kammer ein von einem Piezoaktor bewegbarer, mit einer Hydraulikflüssigkeit gefüllter Antriebsbalg ist, der über ein erstes Rückschlagventil hydraulisch mit einer als ein mit der Hydraulikflüssigkeit gefüllter Hydraulikzylinder ausgebildeten zweiten Kammer als ersten Abtrieb verbunden ist, dessen Gehäuse und dessen Hydraulikkolben an einem mit der Hydraulikflüssigkeit gefüllten und eine dritte Kammer ausbildenden Abtriebsbalg als zweiten Abtrieb mechanisch parallel gekoppelt sind, wobei der Abtriebsbalg über ein zweites Rückschlagventil hydraulisch mit der Hydraulikflüssigkeit gefüllten vierten Kammer als Reservoire verbunden ist, wobei dieses über ein drittes Rückschlagventil mit dem Abtriebsbalg und der Hydraulikzylinder über ein viertes Rückschlagventil mit dem Abtriebsbalg hydraulisch verbunden ist.

Antriebsbalg ist hier insbesondere ein eine Flüssigkeit beinhaltendes, insbesondere in Bewegungsrichtung, elastisches Reservoir, das derart eingerichtet ist, dass auf dieses Kraft aufbringbar ist.

Abtriebsbalg ist hier insbesondere ein eine Flüssigkeit beinhaltendes, insbesondere in Bewegungsrichtung, elastisches Reservoir, das derart eingerichtet ist, dass aus diesem Kraft ausgebbar ist.

Gemäß einem zweiten Aspekt wird ein Verfahren zum Betrieb eines piezohydraulischen Aktors vorgeschlagen, der als ein vier Kammern aufweisendes System ausgebildet ist, wobei eine erste Kammer ein von einem Piezoaktor bewegbarer, mit einer Hydraulikflüssigkeit gefüllter Antriebsbalg ist, der über ein erstes Rückschlagventil hydraulisch mit einer als ein mit der Hydraulikflüssigkeit gefüllter Hydraulikzylinder ausgebildeten zweiten Kammer als ersten Abtrieb verbunden ist, dessen Gehäuse und dessen Hydraulik Kolben an einem mit der Hydraulikflüssigkeit gefüllten und eine dritte Kammer ausbildenden Abtriebsbalg als zweiten Abtrieb mechanisch parallel gekoppelt sind, wobei der Antriebsbalg über ein zweites Rückschlagventil hydraulisch mit einer mit der Hydraulikflüssigkeit gefüllten vierten Kammer als Reservoire verbunden ist, wobei dieses über ein drittes Rückschlagventil mit dem Abtriebsbalg und dieser über ein viertes Rückschlagventil mit dem Hydraulikzylinder hydraulisch verbunden ist, wobei ein mittels des Ausdehnens des Piezoaktors ausgeführtes Komprimieren und Drücken der Hydraulikflüssigkeit gegen das erste Rückschlagventil, das bei einem eingestellten Druck öffnet und die Hydraulikflüssigkeit in den Hydraulikzylinder fließt und eine Übersetzung oder Untersetzung des Piezohubs ausgeführt wird, wobei mittels eines Zurückziehens des Piezoaktors ein Unterdruck im Antriebsbalg derart erzeugt wird, dass das zweite Rückschlagventil öffnet und Hydraulikflüssigkeit vom Reservoir in den Antriebsbalg fließt und damit ein wiederholbarer Zyklus eines Pumpens abgeschlossen ist.

Ein erfindungsgemäßer piezohydraulischer Aktor hat den Vorteil, dass mit diesem sowohl kraft- als auch geschwindigkeitsoptimiert ausgelenkt werden kann. Der Vorteil gegenüber vergleichbaren herkömmlichen Lösungen, die mit Getriebestufen arbeiten, ist, dass das beschriebene System automatische zwischen Geschwindigkeits- und Kraftmodus wechseln kann. Insbesondere ist es möglich, zwischen den beiden Modi unterbrechungsfrei umzuschalten. Außerdem ist dieser Antrieb bei Verwendung von metallischen Kapselungen aufgrund von Metallbälgen für eine harsche Umgebung beispielsweise bei starken Vibrationen oder großen Verschmutzungen geeignet.

Weitere vorteilhafte Ausgestaltungen werden in Verbindung mit den Unteransprüchen beansprucht.

Gemäß einer vorteilhaften Ausgestaltung kann der hydraulische Querschnitt des Hydraulikkolbens kleiner als der hydraulische Querschnitt der als Abtriebsbalg geschaffenen dritten Kammer und kleiner als der hydraulische Querschnitt der als Antriebsbalg geschaffenen ersten Kammer sein.

Der hydraulische Querschnitt eines Bauteils ist hier insbesondere die von dem Bauteil geschaffene Fläche, auf die eine für einen Druckaufbau notwendige Kraft senkrecht wirkt und die senkrecht zu einer Bewegungsrichtung orientiert ist.

Gemäß einer weiteren vorteilhaften Ausgestaltung kann das vierte Rückschlagventil derart eingerichtet sein, dass es bei einem Druckanstieg im ersten Abtrieb in Folge einer äußeren Gegenkraft derart öffnet, dass Hydraulikflüssigkeit zusätzlich zum zweiten Abtrieb gepumpt wird.

Gemäß einer weiteren vorteilhaften Ausgestaltung kann das dritte Rückschlagventil eine Leckage zum Rückdriften von Hydraulikflüssigkeit vom Abtriebsbalg zum Reservoire aufweisen.

Gemäß einer weiteren vorteilhaften Ausgestaltung kann parallel zum dritten Rückschlagventil eine Drossel zum Rückdriften von Hydraulikflüssigkeit vom Abtriebsbalg zum Reservoire hydraulisch angeschlossen sein.

Gemäß einer weiteren vorteilhaften Ausgestaltung kann der mechanische Abtrieb mittels einer Fläche des Hydraulikkolbens bereit gestellt werden.

Gemäß einer weiteren vorteilhaften Ausgestaltung kann der mechanische Abtrieb mittels einer Fläche der als Abtriebsbalg geschaffenen dritten Kammer bereit gestellt werden, wobei der Hydraulikkolben, insbesondere form- oder kraftschlüssig, mit der Fläche des Abtriebsbalgs verbunden sein kann.

Gemäß einer weiteren vorteilhaften Ausgestaltung kann der Hydraulikzylinder und zumindest teilweise der Hydraulikkolben innerhalb der als Abtriebsbalg geschaffenen dritten Kammer positioniert sein.

Gemäß einer weiteren vorteilhaften Ausgestaltung kann der Piezoaktor mittels Pulsweitenmodulation einer Ansteuerspannung elektrisch angesteuert werden.

Gemäß einer weiteren vorteilhaften Ausgestaltung kann das dritte Rückschlagventil öffnen, wenn infolge des Pumpens der Hydraulikflüssigkeit in den Hydraulikzylinder ein Unterdruck im Abtriebsbalg erzeugt ist, und Hydraulikflüssigkeit vom Reservoire in den Abtriebsbalg fließt.

Gemäß einer weiteren vorteilhaften Ausgestaltung kann falls der erste Abtrieb gegen eine einstellbare Gegenkraft, insbesondere ein Hindernis, fährt, und der Druck im Hydraulikzylinder sich vergrößert, das vierte Rückschlagventil öffnen und Hydraulikflüssigkeit vom Antriebsbalg zusätzlich in den Abtriebsbalg fließen.

Gemäß einer weiteren vorteilhaften Ausgestaltung kann bei einem Zurückziehen des ersten Abtriebs und des zweiten Abtriebs mittels des dritten Rückschlagventils Hydraulikflüssigkeit in den Reservoirebalg rückfließen.

Die Erfindung wird anhand von Ausführungsbeispielen in Verbindung mit den Figuren näher beschrieben. Es zeigen:
- Fig. 1: ein erstes Ausführungsbeispiel eines erfindungsgemäßen piezohydraulischen Aktors;
- Fig. 2: ein zweites Ausführungsbeispiel eines erfindungsgemäßen piezohydraulischen Aktors;
- Fig. 3: ein drittes Ausführungsbeispiel eines erfindungsgemäßen piezohydraulischen Aktors;
- Fig. 4: ein Ausführungsbeispiel eines erfindungsgemäßen Verfahrens.

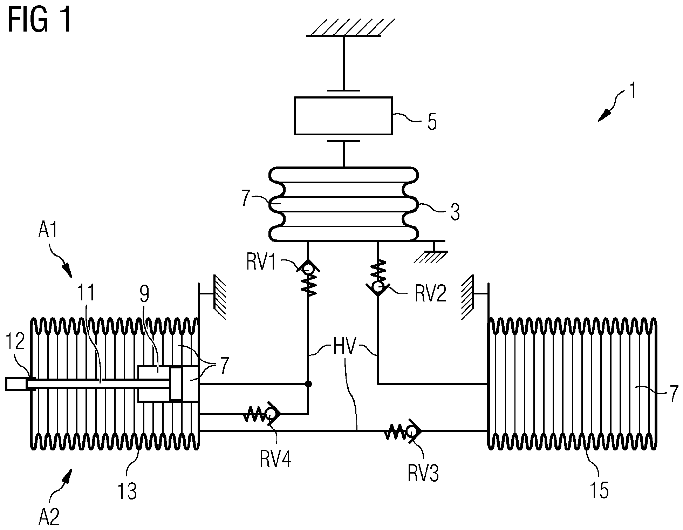

Figur 1 zeigt ein erstes Ausführungsbeispiel eines erfindungsgemäßen piezohydraulischen Aktors 1. Figur 1 zeigt das erfindungsgemäße Konzept. Als Antriebselement wird ein Piezoaktor 5 verwendet, der mit einem hydraulischen System gekoppelt ist. Das hydraulische System weist vier Kammern auf. Und zwar einen Antrieb 3, ein Reservoire 15, einen Abtrieb 1 (A1) und einen Abtrieb 2 (A2). Abtrieb 1 (A1) ist in diesem Fall als Hydraulikzylinder 9 ausgeführt und sowohl an dessen Gehäuse als auch an einem Hydraulikkolben 11 mit den parallel geschalteten Abtrieb 2 (A2) mechanisch fest verbunden. Abtrieb 1 (A1) hat eine kleinere hydraulische Querschnittsfläche als Abtrieb 2 (A2) und gegebenenfalls als der Antrieb 3. Zum Ansteuern des Aktors 1 wird eine Spannung in Pulsweitenmodulation - (PWM) - Form angelegt. Infolge des Spannungsanstiegs des PWM-Signals dehnt sich der Piezo 5 aus, wodurch das Fluid 7 im Antrieb 3 komprimiert wird und der Druck aufgrund der Quasi-Inkompressibilität steigt. Dadurch öffnet sich das Rückschlagventil RV1, sodass Öl als Ausführungsbeispiel für die Hydraulikflüssigkeit 7 vom Antrieb 3 in den Abtrieb A1, also in den Hydraulikzylinder 9 fließt. Mit kleinerem Querschnitt von Abtrieb A1 im Vergleich zum Antrieb 3 erfolgt eine Übersetzung des Piezohubs. Als Nächstes wird die PWM-Spannung an Piezo 5 wieder auf null gesetzt, wodurch sich der Druck im Antrieb 3 verringert und aufgrund der Volumenreduktion des Fluids 7 ergibt sich ein Unterdruck (dabei wurde zuvor ein Teil des im Antrieb 3 vorhandenen Fluids 7 in den Abtrieb A1 gepumpt). In Folge des Unterdrucks öffnet das Rückschlagventil RV 2 und Fluid 7 wird vom Reservoire 15 in den Antrieb 3 gesaugt. Danach kann die PWM-Spannung wieder erhöht werden und der zuvor beschriebene Zyklus wiederholt werden. Durch die Wiederholung wird stufenweise Öl als Ausführungsbeispiel für die Hydraulikflüssigkeit 7 vom Reservoir 15 über den Antrieb 3 in den Abtrieb A1 gepumpt. In Folge der Auslenkung des Hydraulikkolbens 11, also des Abtriebs A1, wird ebenso der Abtrieb A2 ausgelenkt, da beide mechanisch miteinander gekoppelt sind. Bezugszeichen 12 bezeichnet eine Befestigungsstelle, an der ein Abtriebsbalg 13 mit dem Hydraulikkolben 11 mechanisch verbunden ist. Da in dem Abtrieb A2 keine Hydraulikflüssigkeit 7 aktiv gepumpt wird, würde Unterdruck entstehen, da die Fluidmenge trotz steigenden Volumen des zweiten Abtriebs A2 konstant bleibt. Dadurch würde eine Gegenkraft am Abtrieb A1 entstehen, wodurch die Auslenkung des Abtriebs A1 blockiert werden würde. Aus diesem Grunde wird eine hydraulische Verbindung zwischen Abtrieb A2 und Reservoire 15 geschaffen, die das Rückschlagventil RV3 aufweist. Dieses Rückschlagventil RV3 öffnet sich, wenn in Folge des Pumpens der Hydraulikflüssigkeit 7 in den Abtrieb A1 ein Unterdruck in dem zweiten Abtrieb A2 entsteht. Dadurch wird auf passive Weise dafür gesorgt, dass der zweite Abtrieb A2 lediglich einen geringen Einfluss auf die Expansion von dem ersten Abtrieb A1 hat.

Sobald der erste Abtrieb A1 gegen eine Gegenkraft, beispielsweise in Folge eines Hindernisses, bewegt wird oder fährt, ist für den Aktor 1 zum Betrieb erforderlich, dass viel Kraft aufgebaut wird. Dies ist allerdings mit dem ersten Abtrieb A1 lediglich bedingt möglich, da die hydraulische Querschnittsfläche zu klein gewählt wurde, um eine große Geschwindigkeitsübersetzung bereit zu stellen. Je kleiner die hydraulische Fläche des ersten Abtriebs A1 ist, desto kleiner ist die Abtriebskraft bei einem maximalen Druck im ersten Abtrieb A1. Aus diesem Grund ist zwischen dem ersten Abtrieb A1 und dem zweiten Abtrieb A2 ein Rückschlagventil RV4 verbaut. Steigt der Druck im ersten Abtrieb A1 aufgrund einer Gegenkraft, öffnet sich das Rückschlagventil RV4, wodurch die Hydraulikflüssigkeit 7 zusätzlich zu dem ersten Abtrieb A1 ebenso den zweiten Abtrieb A2 in diesen gepumpt wird. Da bei dem zweiten Abtrieb A2 der hydraulische Querschnitt deutlich größer ist, steigt im Vergleich zu dem ersten Abtrieb A1 bei gleichem Druck die vom zweiten Abtrieb A2 bereit gestellte Abtriebskraft.

Das Zurückziehen des ersten und des zweiten Abtriebs A1 und A2 erfolgt gemäß diesem Konzept mittels einer eingebauten Leckage. Gemäß Figur 1 kann das dritte Rückschlagventil RV3 mit einer einfachen Leckage bereit gestellt sein, sodass die Hydraulikflüssigkeit 7 langsam vom zweiten Abtrieb A2 zum Reservoire 15 zurückdriftet.

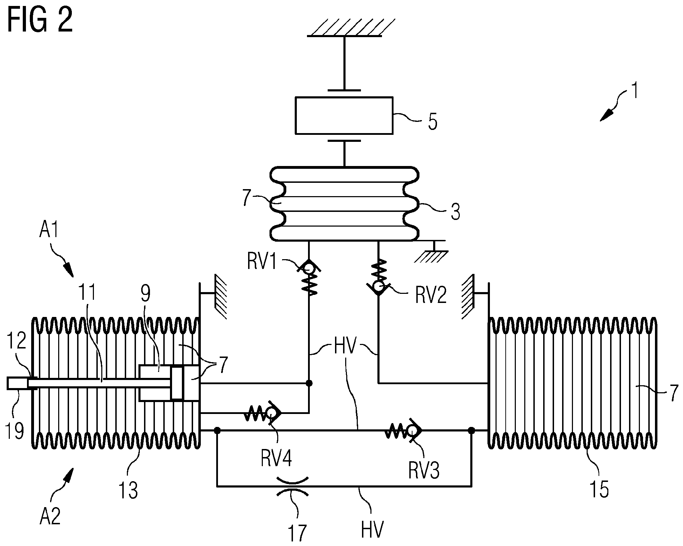

Figur 2 zeigt ein zweites Ausführungsbeispiel eines erfindungsgemäßen piezohydraulischen Aktors 1. Dabei weist dieses zweite Ausführungsbeispiel weitgehend dieselben Elemente wie das erste Ausführungsbeispiel gemäß Figur 1 auf. Alternativ wird gemäß Figur 2 parallel zu dem Rückschlagventil RV3 zusätzlich eine Drossel 17 verbaut. Die Drossel 17 kann alternativ oder kumulativ ein Zurückdriften der Hydraulikflüssigkeit 7 langsam vom zweiten Abtrieb A2 zum Reservoire 15 bereitstellen. Figur 2 zeigt eine Fläche 19 des Hydraulikkolbens 11 des Hydraulikzylinders 9, wobei mittels dieser Fläche 19 eine Kraftübertragung des erfindungsgemäßen Aktors 1 ausgeführt wird.

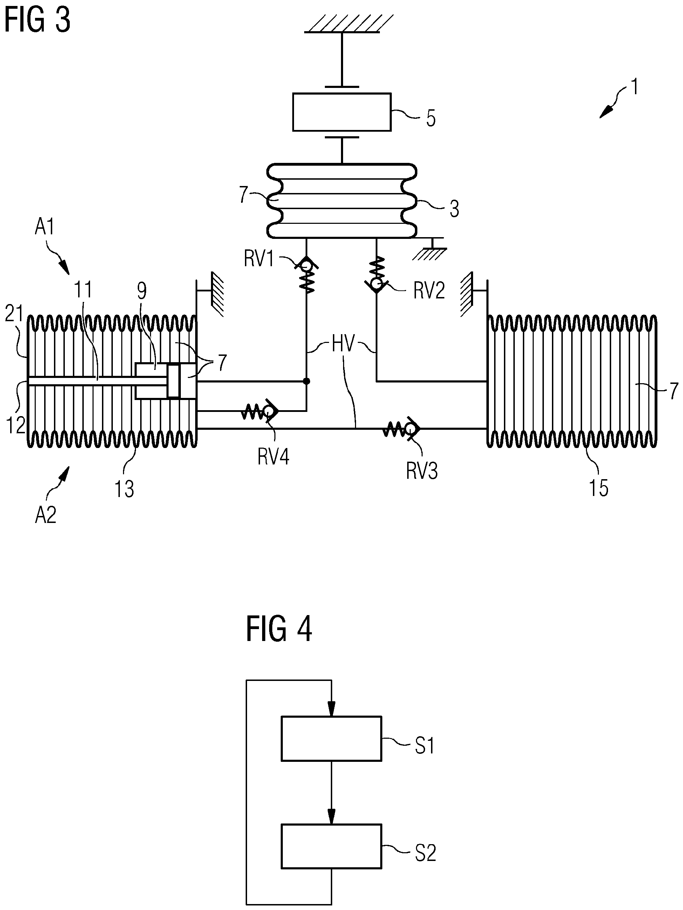

Figur 3 zeigt ein drittes Ausführungsbeispiel eines erfindungsgemäßen piezohydraulischen Aktors 1. Dabei weist das dritte Ausführungsbeispiel weitgehend die gleichen Systemelemente wie das erste Ausführungsbeispiel gemäß Figur 1 auf. Entsprechend ist Figur 3 ebenso wie Figur 2 mit den zu Figur 1 gleichen Bezugszeichen gekennzeichnet. Gemäß dem Ausführungsbeispiel gemäß Figur 3 erfolgt der mechanische Abtrieb im Unterschied zu Figur 2 nicht über die Fläche 19, sondern über die Fläche 21, die über den Abtriebsbalg 13 des zweiten Abtriebs A2 ausgebildet wird. Dabei kann der Hydraulikkolben 11 im zweiten Abtrieb A2 entweder form- oder kraftschlüssig an der Befestigungsstelle des Abtriebsbalgs 13 mit dem Hohlzylinderkolben 11 mechanisch verbunden sein.

Figur 4 zeigt ein Ausführungsbeispiel eines erfindungsgemäßen Verfahrens. Das Verfahren betrifft den Betrieb des erfindungsgemäßen piezohydraulischen Aktors 1 beispielsweise gemäß den vorstehend beschriebenen Ausführungsbeispielen. Mittels eines ersten Schrittes S1 erfolgt ein Ausdehnen des Piezoaktors und ein Komprimieren und Drücken der Hydraulikflüssigkeit gegen das erste Rückschlagventil, das bei einem eingestellten Druck öffnet und die Hydraulikflüssigkeit in den Hydraulikzylinder fließen lässt und dabei eine Übersetzung oder Untersetzung des Piezohubs ausgeführt wird. Mit einem zweiten Schritt S2 erfolgt ein Zusammenziehen des Piezoaktors, wobei ein Unterdruck im Antriebsbalg derart erzeugt wird, dass das zweite Rückschlagventil öffnet und Hydraulikflüssigkeit vom Reservoire in den Antriebsbalg fließt und auf diese Weise ein Zyklus eines Pumpens abgeschlossen ist. Die Schritte S1 und S2 können wiederholt zyklisch ausgeführt werden.

## Patentansprüche

1. Piezohydraulischer Aktor (1), der als ein vier Kammern aufweisendes System ausgebildet ist, wobei eine erste Kammer ein von einem Piezoaktor (5) bewegbarer, mit einer Hydraulikflüssigkeit (7) gefüllter Antriebsbalg (3) ist, der über ein erstes Rückschlagventil (RV1) hydraulisch mit einer als ein mit der Hydraulikflüssigkeit (7) gefüllter Hydraulikzylinder (9) ausgebildeten zweiten Kammer als ersten Abtrieb (A1) verbunden ist, dessen Gehäuse und dessen Hydraulikkolben (11) an einen mit der Hydraulikflüssigkeit (7) gefüllten und eine dritte Kammer ausbildenden Abtriebsbalg (13) als zweiten Abtrieb (A2) mechanisch parallel gekoppelt sind, wobei der Antriebsbalg über ein zweites Rückschlagventil (RV2) hydraulisch mit einer mit der Hydraulikflüssigkeit (7) gefüllten vierten Kammer als Reservoir (15) verbunden ist, wobei dieser über ein drittes Rückschlagventil (RV3) mit dem Abtriebsbalg (13) und der Hydraulikzylinder (9) über ein viertes Rückschlagventils (RV4) mit dem Abtriebsbalg (13) hydraulisch verbunden ist.

2. Piezohydraulischer Aktor (1) gemäß Anspruch 1,
**dadurch gekennzeichnet, dass**
der hydraulische Querschnitt des Hydraulikkolbens (11) kleiner als der hydraulische Querschnitt der als Abtriebsbalg (13) geschaffenen dritten Kammer und insbesondere kleiner als der hydraulische Querschnitt der als Antriebsbalg (3) geschaffenen ersten Kammer ist.

3. Piezohydraulischer Aktor gemäß Anspruch 1 oder 2,
**dadurch gekennzeichnet, dass**
das vierte Rückschlagventil (RV4) derart eingerichtet ist, dass es bei einem Druckanstieg im ersten Abtrieb (A1) infolge einer äußeren Gegenkraft derart öffnet, dass Hydraulikflüssigkeit (7) zusätzlich zum zweiten Abtrieb (A2) gepumpt wird.

4. Piezohydraulischer Aktor gemäß Anspruch 1, 2 oder 3,
**dadurch gekennzeichnet, dass**
das dritte Rückschlagventil (RV3) eine Leckage zum Rückdriften von Hydraulikflüssigkeit (7) vom Abtriebsbalg (13) zum Reservoir (15) aufweist.

5. Piezohydraulischer Aktor gemäß einem der vorhergehenden Ansprüche,
**dadurch gekennzeichnet, dass**
parallel zum dritten Rückschlagventil (RV3) eine Drossel (17) zum Rückdriften von Hydraulikflüssigkeit (7) vom Abtriebsbalg (13) zum Reservoir (15) hydraulisch angeschlossen ist.

6. Piezohydraulischer Aktor gemäß einem der vorhergehenden Ansprüche,
**dadurch gekennzeichnet, dass**
der mechanische Abtrieb mittels einer Fläche (19) des Hydraulikkolbens (11) bereitgestellt wird.

7. Piezohydraulischer Aktor gemäß einem der vorhergehenden Ansprüche,
**dadurch gekennzeichnet, dass**
der mechanische Abtrieb mittels einer Fläche (21) der als Abtriebsbalg geschaffenen dritten Kammer bereitgestellt wird, wobei der Hydraulikkolben, insbesondere form- oder kraftschlüssig, mit der Fläche des Abtriebsbalgs verbunden ist.

8. Piezohydraulischer Aktor gemäß einem der vorhergehenden Ansprüche,
**dadurch gekennzeichnet, dass**
der Hydraulikzylinder und zumindest teilweise der Hydraulickolben innerhalb der als Abtriebsbalg geschaffenen dritten Kammer positioniert sind.

9. Piezohydraulischer Aktor gemäß einem der vorhergehenden Ansprüche,
**dadurch gekennzeichnet, dass**
der Piezoaktor mittels Pulsweitenmodulation einer Ansteuerspannung elektrisch angesteuert wird.

10. Verfahren zum Betrieb eines piezohydraulischen Aktors, der als ein vier Kammern aufweisendes System ausgebildet ist, wobei eine erste Kammer ein von einem Piezoaktor bewegbarer, mit einer Hydraulikflüssigkeit gefüllter Antriebsbalg ist, der über ein erstes Rückschlagventil (RV1) hydraulisch mit einer als ein mit der Hydraulikflüssigkeit gefüllter Hydraulikzylinder ausgebildeten zweiten Kammer als ersten Abtrieb (A1) verbunden ist, dessen Gehäuse und dessen Hydraulikkolben an einen mit der Hydraulikflüssigkeit gefüllten und eine dritte Kammer ausbildenden Abtriebsbalg als zweiten Abtrieb (A2) mechanisch parallel gekoppelt sind, wobei der Antriebsbalg über ein zweites Rückschlagventil (RV2) hydraulisch mit einer mit der Hydraulikflüssigkeit gefüllten vierten Kammer als Reservoirbalg verbunden ist, wobei dieser über ein drittes Rückschlagventil (RV3) mit dem Abtriebsbalg und dieser über ein viertes Rückschlagventil (RV4) mit dem Hydraulikzylinder hydraulisch verbunden ist, wobei
ein mittels des Ausdehnens (S1) des Piezoaktors ausgeführtes Komprimieren und Drücken der Hydraulikflüssigkeit gegen das erste Rückschlagventil (RV1), das bei einem eingestellten Druck öffnet und die Hydraulikflüssigkeit in den Hydraulikzylinder fließt und eine Übersetzung oder Untersetzung des Piezohubs ausgeführt wird, wobei mittels eines Zusammenziehens (S2) des Piezoaktors ein Unterdruck im Antriebsbalg derart erzeugt wird, dass das zweite Rückschlagventil (RV2) öffnet und Hydraulikflüssigkeit vom Reservoir in den Antriebsbalg fließt und damit ein wiederholbarer Zyklus eines Pumpens abgeschlossen ist.

11. Verfahren gemäß Anspruch 10,
**dadurch gekennzeichnet, dass**
das dritte Rückschlagventil (RV3) öffnet, wenn infolge des Pumpens der Hydraulikflüssigkeit in den Hydraulikzylinder ein Unterdruck im Abtriebsbalg erzeugt ist, und Hydraulikflüssigkeit vom Reservoirbalg in den Abtriebsbalg fließt.

12. Verfahren gemäß Anspruch 10 oder 11,
**dadurch gekennzeichnet, dass**
falls der erste Abtrieb (A1) gegen eine einstellbare Gegenkraft, insbesondere ein Hindernis, fährt und der Druck im Hydraulikzylinder sich vergrößert, das vierte Rückschlagventil (RV4) öffnet und Hydraulikflüssigkeit vom Antriebsbalg zusätzlich in den Abtriebsbalg fließt.

13. Verfahren gemäß Anspruch 10, 11 oder 12,
**dadurch gekennzeichnet, dass**
bei einem Zurückziehen des ersten Abtriebs (A1) und des zweiten Abtriebs (A2) mittels des dritten Rückschlagventils (RV3) Hydraulikflüssigkeit in den Reservoirbalg rückfließt.

## Claims

1. Piezo-hydraulic actuator (1) configured as a system comprising four chambers, wherein a first chamber is a drive bellow (3) filled with a hydraulic fluid (7) and movable by a piezo actuator (5), the drive bellow (3) being hydraulically connected via a first back pressure valve (RV1) with a second chamber configured as a hydraulic cylinder (9) filled with the hydraulic fluid (7) as first output (A1), the housing and the hydraulic piston (11) of which are mechanically coupled in parallel to an output bellow (13) filled with the hydraulic fluid (7) and forming a third chamber as second output (A2), wherein the drive bellow is hydraulically connected via a second back pressure valve (RV2) with a fourth chamber filled with the hydraulic fluid (7) as reservoir (15), wherein same is hydraulically connected via a third back pressure valve (RV3) with the output bellow (13) and the hydraulic cylinder (9) via a fourth back pressure valve (RV4) with the output bellow (13).

2. Piezo-hydraulic actuator (1) according to claim 1,
**characterized in that**
the hydraulic cross-section of the hydraulic piston (11) is smaller than the hydraulic cross-section of the third chamber configured as output bellow (13) and in particular smaller than the hydraulic cross-section of the first chamber configured as drive bellow (3).

3. Piezo-hydraulic actuator according to claim 1 or 2
**characterized in that**
the fourth back pressure valve (RV4) is configured in such a way that in the case of a pressure increase in the first output (A1) as a consequence of an outer counter force it opens in such a way that hydraulic fluid (7) is pumped in addition to the second output (A2).

4. Piezo-hydraulic actuator according to claim 1, 2, or 3,
**characterized in that**
the third back pressure valve (RV3) comprises a leakage for the drifting back of hydraulic fluid (7) from the output bellow (13) to the reservoir (15).

5. Piezo-hydraulic actuator according to any one of the preceding claims,
**characterized in that**
in parallel to the third back pressure valve (RV3) a throttle (17) for the drifting back of the hydraulic fluid (7) from the output bellow (13) to the reservoir (15) is hydraulically connected.

6. Piezo-hydraulic actuator according to any one of the preceding claims,
**characterized in that**
the mechanical output is provided by a surface (19) of the hydraulic piston (11).

7. Piezo-hydraulic actuator according to any one of the preceding claims,
**characterized in that**
the mechanical output is provided by a surface (21) of the output bellow configured as third chamber, wherein the hydraulic piston is connected with the surface of the output bellow, in particular in a form-fitted or force-fitted way.

8. Piezo-hydraulic actuator according to any one of the preceding claims,
**characterized in that**
the hydraulic cylinder and at least partly the hydraulic piston are positioned within the third chamber configured as output bellow.

9. Piezo-hydraulic actuator according to any one of the preceding claims,
**characterized in that**
the piezo actuator is electrically controlled by means of pulse width modulation of a control voltage.

10. Method for operating a piezo-hydraulic actuator configured as a system comprising four chambers, wherein a first chamber is a drive bellow movable by a piezo actuator and filled with a hydraulic fluid, the drive bellow being hydraulically connected via a first back pressure valve (RV1) with a second chamber configured as a hydraulic cylinder filled with the hydraulic fluid as first output (A1), the housing and the hydraulic piston of which are mechanically coupled in parallel to an output bellow filled with the hydraulic fluid and forming a third chamber as second output (A2), wherein the drive bellow is hydraulically connected via a second back pressure valve (RV2) with a fourth chamber filled with the hydraulic fluid as reservoir bellow, wherein same is hydraulically connected via a third back pressure valve (RV3) with the output bellow and same via a fourth back pressure valve (RV4) with the hydraulic cylinder, wherein
a compressing and pressing of the hydraulic fluid, performed by the expanding (S1) of the piezo actuator, against the first back pressure valve (RV1), which at a set pressure opens and the hydraulic fluid flows into the hydraulic cylinder and a transmission ratio or reduction ratio of the piezo stroke is performed, wherein by a contracting (S2) of the piezo actuator a negative pressure in the drive bellow is produced in such a way that the second back pressure valve (RV2) opens and hydraulic fluid flows from the reservoir into the drive bellow and thus a repeatable cycle of a pumping is completed.

11. Method according to claim 10,
**characterized in that**
the third back pressure valve (RV3) opens, if as a consequence of the pumping the hydraulic fluid in the hydraulic cylinder a negative pressure in the output bellow is produced, and hydraulic fluid flows from the reservoir bellow into the output bellow.

12. Method according to claim 10 or 11,
**characterized in that**
in case the first output (A1) drives against an adjustable counterforce, in particular an obstacle, and the pressure in the hydraulic cylinder increases, the fourth back pressure valve (RV4) opens and hydraulic fluid flows from the drive bellow additionally into the output bellow.

13. Method according to claim 10, 11, or 12,
**characterized in that**
upon a retracting of the first output (A1) and the second output (A2) by the third back pressure valve (RV3) hydraulic fluid flows back into the reservoir bellow.

## Revendications

1. Actionneur piézo-hydraulique (1), conçu comme un système à quatre chambres, une première chambre étant un soufflet d'entraînement (3) qui peut être déplacé par un piézo-actionneur (5), qui est rempli d'un fluide hydraulique (7) et qui est relié hydrauliquement par une première soupape anti-retour (RV1) à une deuxième chambre, conformée en première sortie (A1), qui est conçue comme un cylindre hydraulique (9) rempli du fluide hydraulique (7) et dont le boîtier et le piston hydraulique (11) sont accouplés mécaniquement en parallèle à un soufflet de sortie (13), conformé en deuxième sortie (A2), qui est rempli du fluide hydraulique (7) et qui forme une troisième chambre, le soufflet d'entraînement étant relié hydrauliquement par une deuxième soupape anti-retour (RV2) à une quatrième chambre, conformée en réservoir (15), qui est remplie du fluide hydraulique (7), ce réservoir étant relié hydrauliquement par une troisième soupape anti-retour (RV3) au soufflet de sortie (13) et le cylindre hydraulique (9) étant relié par une quatrième soupape anti-retour (RV4) au soufflet de sortie (13).

2. Actionneur piézo-hydraulique (1) selon la revendication 1,
**caractérisé en ce que**
la section transversale hydraulique du piston hydraulique (11) est plus petite que la section transversale hydraulique de la troisième chambre conformée en soufflet de sortie (13) et en particulier inférieure à la section transversale hydraulique de la première chambre conformée en soufflet d'entraînement (3).

3. Actionneur piézo-hydraulique selon la revendication 1 ou 2,
**caractérisé en ce que**
la quatrième soupape anti-retour (RV4) est conçue de manière à s'ouvrir en cas d'augmentation de pression dans la première sortie (A1) à la suite d'une force antagoniste extérieure de façon à pomper en plus le fluide hydraulique (7) vers le deuxième sortie (A2).

4. Actionneur piézo-hydraulique selon la revendication 1, 2 ou 3,
**caractérisé en ce que**
la troisième soupape anti-retour (RV3) présente une fuite vers la dérive de retour du fluide hydraulique (7) allant du soufflet de sortie (13) au réservoir (15).

5. Actionneur piézo-hydraulique selon l'une des revendications précédentes,
**caractérisé en ce que**
un étranglement (17) destiné à la dérive de retour du fluide hydraulique (7) allant du soufflet de sortie (13) au réservoir (15) est raccordé hydrauliquement parallèlement à la troisième soupape anti-retour (RV3).

6. Actionneur piézo-hydraulique selon l'une des revendications précédentes,
**caractérisé en ce que**
la sortie mécanique est produite au moyen d'une surface (19) du piston hydraulique (11).

7. Actionneur piézo-hydraulique selon l'une des revendications précédentes,
**caractérisé en ce que**
la sortie mécanique est produite au moyen d'une surface (21) de la troisième chambre conformée en soufflet de sortie, le piston hydraulique étant relié, en particulier par complémentarité de formes ou en force, à la surface du soufflet de sortie.

8. Actionneur piézo-hydraulique selon l'une des revendications précédentes,
**caractérisé en ce que**
le cylindre hydraulique et au moins en partie le piston hydraulique sont positionnés à l'intérieur de la troisième chambre conformée en soufflet de sortie.

9. Actionneur piézo-hydraulique selon l'une des revendications précédentes,
**caractérisé en ce que**
le piézo-actionneur est commandé électriquement par modulation de largeur d'impulsion d'une tension de commande.

10. Procédé d'actionnement d'un actionneur piézo-hydraulique qui est conçu comme un système à quatre chambres,
une première chambre étant un soufflet d'entraînement qui peut être déplacé par un piézo-actionneur, qui est rempli d'un fluide hydraulique et qui est relié hydrauliquement par une première soupape anti-retour (RV1) à une deuxième chambre, conformée en première sortie (A1), qui est conçue comme un cylindre hydraulique rempli du fluide hydraulique et dont le boîtier et le piston hydraulique sont accouplés mécaniquement en parallèle à un soufflet de sortie, conformé en deuxième sortie (A2), qui est rempli du fluide hydraulique et qui forme une troisième chambre, le soufflet d'entraînement étant relié hydrauliquement par une deuxième soupape anti-retour (RV2) à une quatrième chambre, conformée en soufflet de réservoir, qui est remplie du fluide hydraulique, ce soufflet de réservoir étant relié hydrauliquement par une troisième soupape anti-retour (RV3) au soufflet de sortie et ce soufflet de sortie étant relié hydrauliquement par une quatrième soupape anti-retour (RV4) au cylindre hydraulique, la compression et la pression du fluide hydraulique, réalisées par l'extension (S1) du piézo-actionneur, étant réalisées contre la première soupape anti-retour (RV1), qui s'ouvre à une pression réglée, et le fluide hydraulique s'écoulant jusque dans le cylindre hydraulique et une élévation ou un abaissement de la piézo-course étant réalisée, une pression négative étant générée dans le soufflet d'entraînement par la rétraction (S2) du piézo-actionneur de sorte que la deuxième soupape anti-retour (RV2) s'ouvre et le fluide hydraulique s'écoule du réservoir jusque dans le soufflet d'entraînement, permettant ainsi de terminer un cycle de pompage qui peut être répété.

11. Procédé selon la revendication 10,
**caractérisé en ce que**
la troisième soupape anti-retour (RV3) s'ouvre lorsqu'une pression négative est générée dans le soufflet de sortie et que le fluide hydraulique s'écoule du réservoir jusque dans le soufflet de sortie, en raison du pompage du fluide hydraulique jusque dans le cylindre hydraulique.

12. Procédé selon la revendication 10 ou 11,
**caractérisé en ce que**
si la première sortie (A1) s'oppose à une force antagoniste réglable, en particulier un obstacle, et que la pression dans le cylindre hydraulique augmente, la quatrième soupape anti-retour (RV4) s'ouvre et le fluide hydraulique s'écoule en outre du soufflet d'entraînement jusque dans le soufflet de sortie.

13. Procédé selon la revendication 10, 11 ou 12,
**caractérisé en ce que**
lors de la rétraction de la première sortie (A1) et de la deuxième sortie (A2) au moyen de la troisième soupape anti-retour (RV3), le fluide hydraulique retourne dans le soufflet de réservoir.
